# FASCICULE DE BREVET EUROPEEN

(11) **EP 3 441 121 B1**
(45) Date de publication et mention de la délivrance du brevet: **10.06.2020**
(21) Numéro de dépôt: 18186637.7
(22) Date de dépôt: 31.07.2018
(51) Int. Cl.: A63J 5/02, G03B 21/54

(54) **DISPOSITIF MOBILE DE PROJECTION POUR SCÉNOGRAPHIE LUMINEUSE**
BEWEGLICHE SCHEINWERFERVORRICHTUNG FÜR LICHTINSZENIERUNGEN
MOBILE PROJECTION DEVICE FOR LUMINOUS SCENOGRAPHY

(30) Priorité: 09.08.2017 FR 1757617
(43) Date de publication de la demande: 13.02.2019
(73) Titulaire: Ligot, Philippe André Constant, 75016 Paris (FR)
(72) Inventeur: Ligot, Philippe André Constant, 75016 Paris (FR)
(74) Mandataire: Cabinet Beau de Loménie

(56) Documents cités:
- WO-A2-2014/125364
- CN-B- 104 091 550
- DE-U1- 29 719 394
- FR-A- 609 845
- GB-A- 222 954
- Patrick Lescouffe: "Tour d'éclairage 9 mètres sur remorque - RÈGLES DE SÉCURITÉ DONNÉES TECHNIQUES", www.kiloutou.fr, 15 décembre 2014 (2014-12-15), XP055471612, Extrait de l'Internet: URL:https://logismarketfr.cdnwm.com/ip/kil outou-location-tour-d-eclairage-chantier-e clairage-de-chantier-1112998.pdf [extrait le 2018-04-30]

## Description

### DOMAINE DE L'INVENTION

Le présent exposé concerne le domaine de la scénographie, et plus particulièrement un dispositif mobile de projection pour scénographie lumineuse.

### ARRIÈRE-PLAN TECHNOLOGIQUE

La scénographie lumineuse, ou mise en scène lumineuse d'un espace, est une activité en plein essor dans laquelle on utilise des faisceaux lumineux dynamiques pour modifier l'impression visuelle renvoyée par un édifice, un espace intérieur ou extérieur, un paysage, etc., afin de présenter un spectacle, créer une ambiance, mettre en valeur un événement, une architecture, illustrer un projet architectural ou signalétique, etc.

La scénographie lumineuse est généralement utilisée dans le cadre d'événements de grande ampleur pour lesquels une mise en scène est spécifiquement créée. Chaque événement présente des contraintes particulières sur le matériel, les moyens humains et logistiques à mettre en oeuvre, en fonction notamment de la puissance lumineuse requise, du type de mise en scène envisagé (images plus ou moins complexes, fixes ou mobiles ou animées, etc.), du fond sur lequel la lumière est projetée, de la configuration spatiale du lieu concerné, des contraintes réglementaires du site, etc.

Ainsi, chaque projet est classiquement traité de manière distincte. Pour répondre à la diversité des besoins, une installation de scénographie lumineuse selon l'état actuel de la technique comprend un échafaudage sur lequel sont positionnés des projecteurs ainsi que tout le matériel nécessaire pour les faire fonctionner. L'échafaudage et les projecteurs sont généralement dimensionnés afin d'être adaptés à chaque projet.

Cependant, une telle installation nécessite des engins de levage ainsi qu'une main d'oeuvre importante pour monter les échafaudages, manipuler, connecter puis caler chaque projecteur, si bien que les coûts d'installation et de désinstallation représentent une part très significative du budget d'un projet de scénographie lumineuse. En outre, chaque installation étant unique, il est nécessaire de justifier, pour chaque projet, qu'elle satisfait les critères d'octroi des autorisations administratives nécessaires, le plus souvent très contraignantes.

Face à la demande croissante de ce type de projets, il existe un besoin d'un nouveau type de dispositif de projection pour scénographie lumineuse, qui soit plus flexible, et donc moins coûteux à mettre en œuvre. FR 609845 divulgue un projecteur ou lanterne de projection mobile et GB 222954 divulgue des moyens pour produire et projeter des écritures ou cartoons. Ces dispositifs ne sont pas des dispositifs de scénographie lumineuse.

### PRÉSENTATION DE L'INVENTION

A cet effet, le présent exposé concerne un dispositif mobile de projection pour scénographie lumineuse, comprenant un engin routier muni d'une structure montée sur roues, et au moins une unité de projection lumineuse montée sur la structure et configurée pour être commandée de façon à réaliser une scénographie lumineuse dans l'environnement extérieur du dispositif mobile de projection.

Un engin routier est un engin configuré pour et destiné à circuler sur des routes. L'engin peut être un véhicule autopropulsé ou une remorque. Un tel engin comprend des roues, éventuellement montées sur un ou plusieurs essieux, dimensionnées pour supporter la structure et lui permettre de circuler, dans des conditions normales de circulations (i.e. sans autorisation spéciale), sur des routes telles qu'un réseau routier classique.

Le dispositif mobile de projection peut comprendre plusieurs unités de projection lumineuse, identiques ou non ; par la suite, pour des raisons de simplification et sans perte de généralité, on parlera d'une seule unité de projection lumineuse. Une telle unité de projection lumineuse peut se trouver à l'intérieur de la structure, la structure pouvant former une enveloppe essentiellement fermée autour de l'unité de projection lumineuse. Selon une variante, l'enveloppe peut prendre une configuration ouverte (en tout ou partie), par exemple pour la projection, et une configuration fermée, par exemple pour la circulation de l'engin routier sur le réseau routier. Alternativement, une unité de projection lumineuse peut être montée sur le toit de la structure. Au sens du présent exposé, la projection lumineuse inclut la projection d'un faisceau laser, mais n'est pas limitée à un tel exemple.

On comprend qu'en tout état de cause, la structure est configurée pour accueillir une ou plusieurs unités de projection lumineuse d'une manière telle que cette ou ces unité(s) soient aptes à réaliser une scénographie lumineuse.

L'environnement extérieur du dispositif mobile de projection désigne ce qui se trouve à l'extérieur du dispositif mobile de projection et qui est destiné à servir de support à la scénographie lumineuse. Par exemple, cet environnement peut comprendre un édifice, un espace intérieur ou extérieur, ou encore un paysage.

Grâce à un tel dispositif mobile de projection, qui forme un ensemble intégré, il est possible de réaliser des scénographies lumineuses à moindre coût. En effet, l'analyse de l'inventeur l'a conduit à constater que, contrairement aux idées reçues, les contraintes techniques et réglementaires applicables à chaque projet de scénographie lumineuse étaient le plus souvent similaires. Par conséquent, la conception d'un dispositif unique et flexible, tel que le dispositif mobile précité, permet de répondre au cahier des charges de la plupart des projets, de diminuer sensiblement les coûts d'exploitation et les temps de mise en place. En outre, l'utilisation d'un dispositif unique facilite sensiblement les démarches administratives puisque le dispositif est certifié une fois pour toutes. De plus, dans la mesure où ce dispositif est mobile, son installation et son évacuation sont facilitées, ce qui diminue les coûts de mise en place et facilite également l'obtention des autorisations administratives puisqu'il est possible de déplacer très rapidement le dispositif en cas de besoin immédiat lié par exemple à la sécurité.

Lorsque l'engin routier est un véhicule autopropulsé, il peut comprendre un moteur et une transmission pour entraîner l'engin. Lorsque l'engin routier est une remorque, il peut comprendre un organe de traction apte à être connecté à un véhicule tracteur. La structure de la remorque peut, le cas échéant, comprendre des cales pour assurer la stabilité du dispositif mobile en l'absence du véhicule tracteur.

Dans certains modes de réalisation, l'unité de projection lumineuse peut être, de façon non limitative, du type choisi dans le groupe formé de spots, de rétroprojecteurs, des vidéoprojecteurs, des dispositifs laser, des dispositifs holographiques. On comprend de ces exemples que le faisceau lumineux émis par l'unité de projection lumineuse est dynamique, au sens où l'unité de projection lumineuse peut être commandée pour que l'image projetée change ou soit mise en mouvement. Ainsi, l'unité de projection lumineuse peut être commandée pour moduler au moins la forme, le dessin, la couleur, l'intensité ou la direction du faisceau lumineux, par opposition à un éclairage statique. En d'autres termes, l'unité de projection lumineuse est configurée pour émettre un ou plusieurs faisceaux lumineux dynamiques, de sorte que l'image résultante peut être la combinaison de plusieurs formes et/ou dessins et/ou couleurs et/ou peut être mobile ou animée. Lorsque le dispositif mobile comprend plusieurs unités de projection lumineuse, chacune desdites unités peut être du type choisi dans le groupe précité. En outre, les unités peuvent être du même type ou de types différents.

Dans certains modes de réalisation, l'unité de projection lumineuse est montée mobile par rapport à l'engin routier. Par exemple, l'unité de projection lumineuse peut être montée mobile en translation et/ou en rotation. Ainsi, l'unité de projection lumineuse peut être montée sur la structure par l'intermédiaire d'une fixation articulée. En particulier, l'unité de projection lumineuse peut être mobile au moins entre une ou plusieurs positions de transport, destinées à garantir la tenue de l'unité de projection lumineuse lorsque l'engin routier est mis en mouvement, et une ou plusieurs positions de projection, dans lesquelles ladite unité est apte à assurer une projection pour scénographie lumineuse.

Dans certains modes de réalisation, le dispositif mobile de projection comprend en outre un système d'évacuation de la chaleur produite par l'unité de projection lumineuse. Un tel système d'évacuation de la chaleur permet d'éviter une hausse trop importante de la température à l'intérieur de la structure lorsque l'unité de projection fonctionne. Un tel système n'était pas utile pour une installation selon l'état de la technique, dans laquelle les projecteurs étaient essentiellement à l'extérieur et l'évacuation naturelle de la chaleur était suffisante.

Dans certains modes de réalisation, le système d'évacuation peut comprendre une unité d'extraction d'air connectée à une sortie d'air de refroidissement de l'unité de projection lumineuse. L'unité de projection lumineuse présente typiquement un organe de refroidissement interne, tel que des ailettes de refroidissement ou un ventilateur, l'air de refroidissement, en général plus chaud que l'air ambiant, étant évacué par une sortie. Ainsi, l'air de refroidissement à évacuer est récupéré directement en sortie de l'unité de projection lumineuse, ce qui améliore l'évacuation de chaleur.

Dans certains modes de réalisation, l'engin routier comprend une cabine de commande et/ou de surveillance de l'unité de projection lumineuse. La cabine peut être apte à accueillir un ou plusieurs opérateurs. La cabine peut comprendre un poste de commande et/ou de surveillance apte à être actionné par un opérateur. La cabine, ou plus généralement la structure, peut comprendre un logement pour du matériel informatique de commande et/ou de surveillance.

Dans certains modes de réalisation, la structure est munie d'au moins une fenêtre, l'unité de projection lumineuse étant montée de façon à pouvoir projeter à travers la fenêtre. La fenêtre peut être une ouverture traversante ménagée dans une paroi externe de la structure. Alternativement, la fenêtre peut être une ouverture munie d'un matériau laissant passer la lumière, par exemple un vitrage ou équivalent. La structure peut être munie de plusieurs fenêtres, notamment correspondant à plusieurs positions de projection de l'unité de projection lumineuse et/ou à plusieurs unités de projection lumineuse. Bien entendu, dans certains modes de réalisations, la ou les fenêtres peuvent être équipées de volets amovibles, ces volets pouvant être opaques, mais pas nécessairement.

Dans certains modes de réalisation, la transmittance lumineuse à travers ladite fenêtre est supérieure ou égale à 90%, de préférence supérieure ou égale à 92%, de préférence encore supérieure ou égale à 95%. Ainsi, que la lumière passe à travers l'air ambiant ou un matériau particulièrement transparent, les pertes de puissance au passage de la fenêtre sont considérablement limitées, ce qui améliore le rendement global du dispositif.

Dans certains modes de réalisation, l'unité de projection lumineuse est agencée dans une partie supérieure de la structure. La partie supérieure s'entend dans le sens d'utilisation normal du dispositif mobile de projection, c'est-à-dire lorsque les roues sont en bas, le dispositif étant considéré selon la direction de la gravité (i.e. la direction de l'accélération gravitationnelle newtonienne créée par la Terre). La partie supérieure peut désigner la moitié supérieure de la structure, de préférence au-delà de 2m (mètres) du sol, repéré par le bas des roues ou le bas de cales le cas échéant, de préférence au-delà de 2,5m du sol.

Le cas échéant, la cabine peut être située dans une partie inférieure de la structure.

Le présent exposé concerne également un ensemble mobile de projection, comprenant un dispositif mobile de projection tel que précédemment décrit et dans lequel l'engin routier est une remorque, et un véhicule tracteur configuré pour tracter la remorque, le véhicule tracteur comprenant un générateur d'énergie et le dispositif mobile de projection comprenant des moyens d'alimentation configurés pour alimenter l'unité de projection lumineuse en énergie à partir du générateur d'énergie.

On comprend donc que l'unité de projection lumineuse peut être alimentée, via les moyens d'alimentation, par le générateur d'énergie de l'engin routier, mais pas uniquement. Par exemple, en alternative ou en complément, l'unité de projection lumineuse peut être alimentée, via les moyens d'alimentation, par d'autres moyens, comme par exemple une source d'énergie extérieure à l'ensemble mobile de projection (par exemple une prise électrique externe). Selon une variante, le dispositif mobile de projection peut comprendre, en complément ou en remplacement, son propre générateur d'énergie permettant d'alimenter les moyens d'alimentation, indépendamment de toute source d'énergie externe au dispositif mobile de projection. Le générateur d'énergie du véhicule tracteur peut être alimenté directement par la source d'énergie à la base de la propulsion du véhicule tracteur. Ainsi, grâce au fait que le véhicule tracteur peut être séparé de la remorque, la remorque peut être laissée sur place, l'unité de projection lumineuse peut fonctionner ou pas, tandis que le véhicule tracteur est conduit pour ravitailler la source d'énergie.

Le présent exposé concerne également l'utilisation d'un dispositif mobile de projection tel que précédemment décrit pour la réalisation d'une prestation de scénographie lumineuse.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente une vue de côté, en coupe, d'un ensemble mobile de projection selon un premier mode de réalisation ;
- la figure 2 représente une vue de dessus de l'ensemble mobile de projection selon le premier mode de réalisation ;
- la figure 3 représente une vue de côté schématique d'un dispositif mobile de projection selon un deuxième mode de réalisation.

### DESCRIPTION DÉTAILLÉE DE MODES DE RÉALISATION

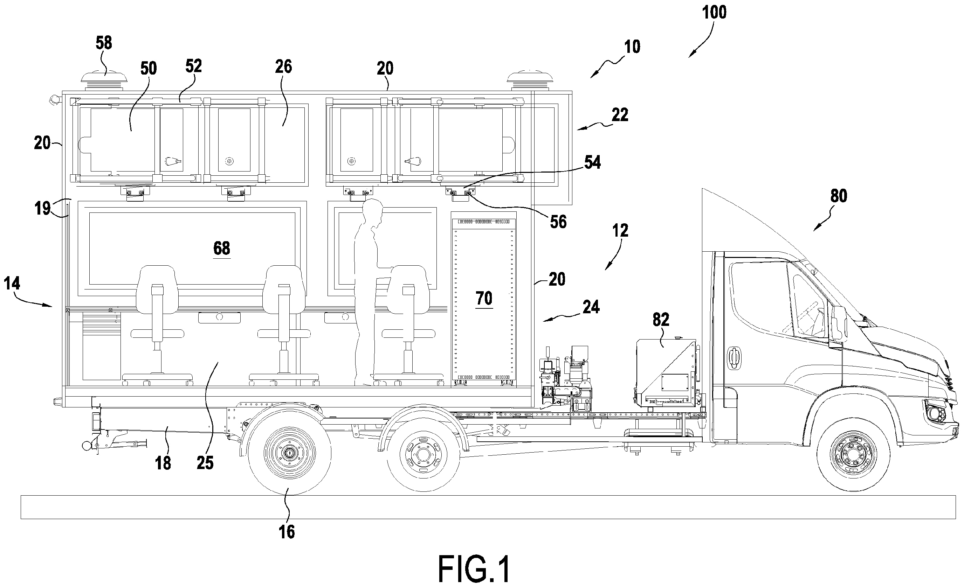

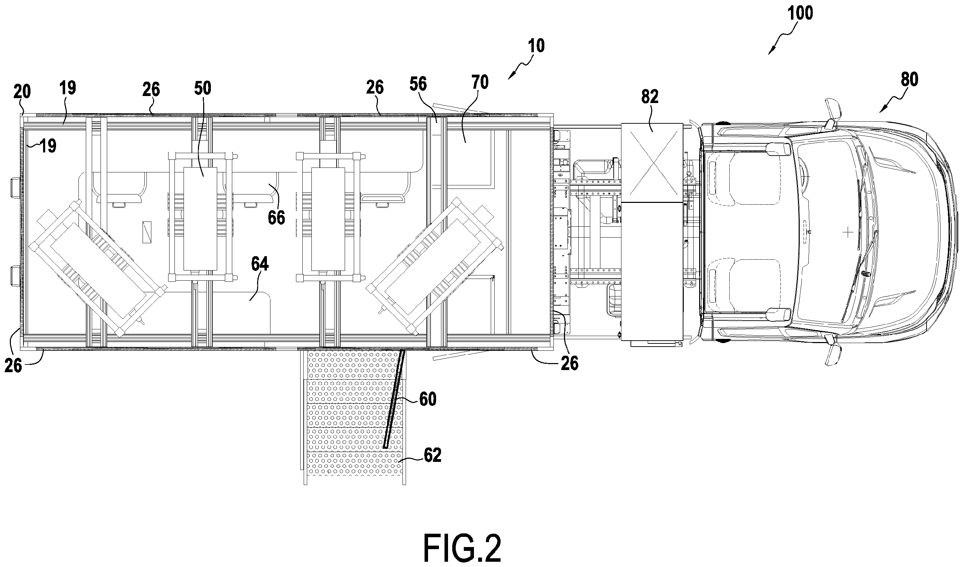

Les figures 1 et 2 représentent un ensemble mobile de projection 100 selon un premier mode de réalisation. En l'espèce, l'ensemble mobile de projection 100 prend la forme d'un camion, ici de 3,5 tonnes, homologué pour circuler sur les routes, dans des conditions normales de circulation. L'ensemble mobile de projection 100 comprend un dispositif mobile de projection 10 ainsi qu'un véhicule tracteur 80 configuré pour tracter le dispositif mobile de projection 10.

Le dispositif mobile de projection 10 est spécialement adapté pour réaliser des prestations de scénographie lumineuse. Il comprend un engin routier 12, en l'occurrence une remorque, et au moins une unité de projection lumineuse 50 configurée pour émettre et projeter un faisceau lumineux pour scénographie, c'est-à-dire un faisceau lumineux dynamique. La remorque 12 comprend, en l'espèce, une structure 14 montée sur des roues 16, ici par l'intermédiaire d'un châssis 18 et d'un ou plusieurs essieux.

La structure 14 comprend des montants 19. Dans ce mode de réalisation, les montants 19 soutiennent des parois externes 20, ici sensiblement verticales ou horizontales (considérées selon la direction de la gravité), délimitant un espace à l'intérieur de la structure 14. Les montants 19 et parois externes 20 sont assemblés au châssis 18. Considéré selon la direction de la gravité, l'espace intérieur présente une partie supérieure 22 de la structure 14 et une partie inférieure 24 de la structure 14. Dans ce mode de réalisation, la partie supérieure 22 de la structure 14 forme un logement dans lequel est agencé au moins une unité de projection 50. La partie inférieure 24 de la structure 14 peut former une cabine 25, notamment pour la commande et/ou la surveillance de l'unité de projection lumineuse 50. La partie supérieure 22 est prévue, de préférence, à partir d'au moins 2 m du sol, en l'occurrence au moins 2,7 m. La hauteur totale de l'engin routier 12 peut être inférieure ou égale à 4 m de façon à permettre sa circulation en conditions normales (i.e. sans autorisation spéciale).

La structure 14 peut être munie d'au moins une fenêtre 26 pour le passage de la lumière en provenance de l'unité de projection lumineuse 50. Dans ce mode de réalisation, la fenêtre 26 prend la forme d'une ouverture réalisée dans la paroi externe 20 et refermée par un matériau transparent, en l'occurrence un vitrage transparent non teinté homologué, de type "extra-clair". Le vitrage peut en outre être réalisé avec un verre de sécurité. Un tel matériau a une transmittance lumineuse supérieure ou égale à 90% dans tout le domaine visible (longueur d'onde comprise entre 400 et 800 nanomètres environ). Alternativement, la fenêtre 26 pourrait être une simple ouverture non fermée. Par ailleurs, la fenêtre 26 peut être masquée par un volet ou cache amovible destinée à être retiré pendant la projection.

Comme il ressort des figures 1 et 2, la structure 14 comprend en l'occurrence une pluralité de fenêtres 26. Chaque fenêtre 26 peut avoir tout ou partie des caractéristiques précédemment décrites. Les fenêtres 26 peuvent être prévues sur différents côtés de la structure 14, afin de pouvoir projeter un faisceau lumineux dans plusieurs directions. Selon un mode de réalisation, les parois externes 20 latérales comprennent chacune au moins une fenêtre 26. En outre, une fenêtre 26 peut être commune à plusieurs unités de projection lumineuse 50. L'unité de projection 50 peut être configurée pour projeter à travers une fenêtre 26 directement ou par l'intermédiaire de systèmes de transformation/transmission optique (lentilles, filtres, réflecteurs, fibre optique, etc.). Il est préférable de maximiser la taille de la fenêtre 26 de façon à limiter la présence de montants et parois opaques sur le trajet des faisceaux lumineux.

Comme indiqué précédemment, le dispositif mobile de projection 10 comprend au moins une unité de projection lumineuse 50 montée sur la structure 14 et configurée pour être commandée de façon à réaliser une scénographie lumineuse dans l'environnement extérieur du dispositif mobile de projection. Dans ce mode de réalisation, le dispositif mobile de projection 10 comprend quatre unités de projection lumineuse 50, par exemple agencées en une rangée sensiblement horizontale ; d'autres agencements sont toutefois possibles. Ces unités 50 sont ici identiques, mais elles pourraient différer entre elles. Les unités de projection lumineuse 50 sont, dans ce mode de réalisation, des vidéoprojecteurs. Toutefois, d'autres types d'unités pourraient être sélectionnés, par exemple des rétroprojecteurs, des dispositifs lasers, des dispositifs holographiques, ou tout système analogue pouvant être commandé pour moduler au moins la forme, le dessin, la couleur, l'intensité ou la direction du faisceau lumineux. Chaque unité de projection lumineuse 50 est ici positionnée en regard d'au moins une fenêtre 26 de façon à pouvoir projeter un faisceau lumineux à travers ladite fenêtre 26. Selon un exemple, la puissance électrique de chaque unité de projection lumineuse 50 peut être supérieure ou égale à 1500 W (Watts), de préférence 1800 W, de préférence encore 2100 W, de préférence encore 2500 W, de préférence encore 2700 W. Par la suite, sauf mention contraire, une seule unité de projection lumineuse 50 sera décrite.

Comme illustré sur les figures 1 et 2, l'unité de projection lumineuse 50 peut être montée dans un cadre 52. Afin de diminuer le poids du dispositif mobile de projection 10, le cadre peut être réalisé en un matériau léger tel que le carbone ou l'aluminium. Le cadre 52 peut être lui-même posé sur un plateau tournant 54. Le plateau tournant est ici rotatif autour d'un axe vertical. Le plateau tournant 54 peut être à son tour monté sur des rails 56, ici transversaux, par rapport auxquels il peut se translater, typiquement au moyen de roulettes ou selon une liaison glissière. Ces éléments forment autant de fixations articulées entre l'unité de projection lumineuse 50 et la structure 14.

Ainsi, l'unité de projection lumineuse 50 peut être montée mobile par rapport à l'engin routier 12. Plus précisément, l'unité de projection lumineuse 50 est ici montée mobile en translation et mobile en rotation par rapport à l'engin routier 12. Dans ce mode de réalisation, l'unité 50 est mobile en translation horizontale grâce aux rails 56. Indépendamment, l'unité 50 est mobile en rotation par rapport un axe vertical grâce au plateau tournant 54. Indépendamment encore, l'unité 50 est mobile en rotation par rapport à un axe horizontal perpendiculaire à la direction de projection, en ajustant l'angle entre le cadre 52 et l'unité 50. Indépendamment encore, l'unité 50 est mobile en rotation par rapport à un axe horizontal parallèle à la direction de projection, le cadre 52 pouvant basculer autour d'un tel axe, de façon à pouvoir se trouver, par exemple, dans une position verticale ou dans une position horizontale.

Ainsi, il est possible d'orienter chaque unité de projection lumineuse 50 indépendamment afin de projeter le faisceau lumineux correspondant dans la direction souhaitée. Compte tenu de l'agencement de fenêtres 26, de surcroît, sur sensiblement tout le pourtour latéral des unités de projection lumineuse 50, le présent dispositif mobile de projection permet d'envisager, avec des contraintes faibles sur le positionnement de l'engin routier, une projection sur sensiblement 360°.

Par ailleurs, l'unité de projection lumineuse 50 est ici posée sur la structure 14, sur les rails 56 portée par les montants 19. Dans d'autres modes de réalisation, l'unité de projection lumineuse 50 pourrait être suspendue à la structure 14.

Afin d'évacuer la chaleur produite par l'unité de projection lumineuse 50, le dispositif mobile de projection 10 peut comprendre un système d'évacuation de la chaleur. En l'espèce, ce système comprend quatre unités d'extraction d'air 58, une pour chaque unité de projection lumineuse 50. Cependant, selon les besoins, il peut être prévu davantage ou moins d'unités d'extraction d'air 58.

Dans ce mode de réalisation, chaque unité d'extraction d'air 58 est directement connectée à une sortie d'air de refroidissement d'une unité de projection lumineuse 50 correspondante. La connexion peut être réalisée au moyen d'une gaine résistante à la chaleur, connue en soi.

Comme indiqué précédemment, l'engin routier 12 peut comprendre une cabine 25 de commande et/ou de surveillance de l'unité de projection lumineuse 50. La cabine 25 est configurée pour accueillir au moins un opérateur. Ainsi, la structure 14 peut être munie d'une porte 60 et de moyens d'accès, tel qu'un escalier 62, pour permettre à un opérateur d'entrer dans la cabine 25. La cabine 25 peut comprendre des aménagements tels qu'un plan de travail 64, des sièges 66, des fenêtres de surveillance 68, des placards informatiques 70. Les placards informatiques 70 peuvent être connectés aux unités de projection lumineuse 50 par des câbles appropriés.

Comme il ressort de la figure 2, il n'est pas prévu de séparation opaque entre la partie inférieure 24 de la structure 14, formant la cabine 25, et la partie supérieure 22 de la structure 14 dans laquelle sont agencées les unités de projection lumineuse 50. Ainsi, un opérateur se trouvant dans la cabine est en mesure d'effectuer la surveillance et la commande des unités de projection lumineuse 50, éventuellement par l'intermédiaire des moyens informatiques contenus dans le placard 70 et/ou d'autres moyens.

Comme indiqué précédemment, l'ensemble mobile de projection comprend un véhicule tracteur 80. En l'occurrence, le véhicule tracteur 80 est un véhicule tracteur de camions conventionnels, hormis concernant les points décrits ci-après.

Notamment, le véhicule tracteur 80 comprend un générateur d'énergie 82, notamment d'énergie électrique. Ce générateur d'énergie 82, en l'espèce un groupe électrogène, est apte à fournir de l'énergie au dispositif mobile de projection 10 qui la reçoit par des moyens d'alimentation (non représentés) appropriés. Dans cet exemple, les moyens d'alimentation sont donc alimentés par le générateur d'énergie 82 de l'engin routier 12, ces moyens d'alimentation alimentant à leur tour les unités de projection lumineuse 50, et plus généralement toute installation électrique présente au sein du dispositif mobile de projection 10.

Le générateur d'énergie 82 peut être alimenté directement par la source d'énergie à la base de la propulsion du véhicule tracteur 80. En l'espèce, le groupe électrogène peut être alimenté en carburant depuis le réservoir du moteur du véhicule tracteur 80. En cas de besoin, il est possible de conduire le véhicule tracteur 80 à une station-service pour remplir le réservoir du moteur (ou, le cas échéant, du générateur d'énergie) tout en laissant la remorque 12 sur place.

Dans d'autres modes de réalisation, un générateur d'énergie peut être prévu, alternativement ou en complément, directement sur dispositif mobile de projection 10.

Le dispositif mobile de projection 10 ou l'ensemble mobile de projection 100 peuvent être utilisés pour la réalisation d'une prestation de scénographie lumineuse. Par exemple, on conduit l'ensemble mobile de projection 100 vers le lieu où la prestation est prévue. Durant la conduite, les unités de projection lumineuse 50 peuvent être verrouillées dans une position de transport prévue de façon à limiter les dommages dus aux aléas de la route, par exemple en position horizontale, sensiblement au milieu des rails 56. Une fois sur place, l'engin routier 12 est éventuellement séparé du véhicule tracteur 80 et/ou mis sur cales. L'engin routier 12 est alimenté en électricité, par exemple depuis le véhicule tracteur 80 ou depuis une source d'énergie externe disponible sur les lieux. Les unités de projection lumineuse 50 sont déplacées de leur position de transport à la position de projection prévue pour assurer la scénographie lumineuse. Le cas échéant, des caches bloquant le passage de la lumière à travers les fenêtres 26 peuvent être retirés. La cabine 25 peut avoir été aménagée au préalable. Ainsi, avec une installation simple et rapide, le dispositif mobile de projection 10 est en mesure d'assurer la prestation de scénographie lumineuse dans l'environnement extérieur dudit dispositif 10.

La scénographie lumineuse peut être réalisée en allumant les unités de projection lumineuse 50 et en contrôlant, par exemple à l'aide de matériel informatique, les mouvements et/ou les changements d'image desdites unités 50. Une fois la scénographie lumineuse réalisée, le dispositif mobile de projection 10 peut être laissé sur place pour une projection future, ou désinstallé, par exemple en effectuant les étapes inverses de celles précédemment décrites.

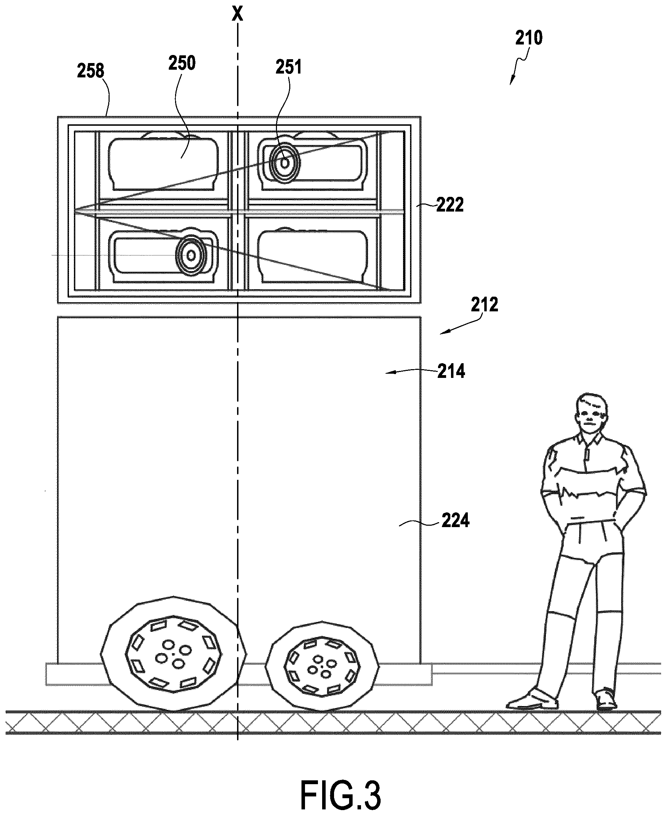

La figure 3 présente un dispositif mobile de projection selon un deuxième mode de réalisation. Sur cette figure, les éléments correspondant ou identiques à ceux du premier mode de réalisation recevront le même signe de référence, au chiffre des centaines près, et ne seront pas décrits à nouveau.

Un dispositif mobile de projection 210 selon un deuxième mode de réalisation comprend un engin routier 212 également de type remorque. Toutefois, par comparaison au premier mode de réalisation, la structure 214 est plus petite, si bien qu'elle ne comprend pas de cabine 25 de commande et/ou de surveillance de l'unité de projection lumineuse. La partie inférieure 224 de la structure 214 abrite des placards informatiques et les câblages nécessaires.

En outre, au lieu d'être disposés selon une rangée, les unités de projection lumineuse 250 sont agencées, considérées selon la direction de la gravité, en deux rangées superposées. Dans ce mode de réalisation, les unités de projection lumineuse 250 peuvent disposer de moyens de rotation, par exemple similaires aux moyens de rotation précédemment décrits. Ainsi, comme illustré sur la figure 3, afin de pouvoir projeter de part et d'autre du dispositif mobile de projection 210, les unités de projection lumineuse 250 sont orientées deux à deux vers des côtés opposés du dispositif mobile de projection 210. En outre, comme il ressort également de la figure 3, chaque unité de projection lumineuse 250 peut être configurée et/ou agencée de sorte que sa lentille de projection 251 soit plus proche, perpendiculairement à la direction de projection, d'un axe central X de la structure 214 que des bords de la structure 214.

En alternative aux extracteurs d'air 58 du premier mode de réalisation, le dispositif mobile de projection 210 selon le deuxième mode de réalisation comprend des grilles d'aération 258, par exemple prévues sur une paroi supérieure de la structure 214, plus précisément sur une paroi supérieure de la partie supérieure 222 dans laquelle sont agencées les unités de projection lumineuse 250. Dans d'autres modes de réalisation, les grilles d'aération 258 et les extracteurs d'air 58 pourraient être combinés.

Le dispositif mobile de projection 210 selon le deuxième mode de réalisation peut être tracté par un véhicule de moindre puissance que le véhicule tracteur 80 du premier mode de réalisation, par exemple un véhicule automobile utilitaire.

En variante aux modes de réalisation présentés ci-dessus, le dispositif mobile de projection pourrait comprendre, comme engin routier, un véhicule autopropulsé.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif mobile de projection (10, 210) pour scénographie lumineuse, comprenant un engin routier (12) muni d'une structure (14, 214) montée sur roues (16), et au moins une unité de projection lumineuse (50, 250) agencée dans une partie supérieure (22, 222) de la structure (14, 214) et configurée pour être commandée de façon à réaliser une scénographie lumineuse dans l'environnement extérieur du dispositif mobile de projection (10, 210), la partie supérieure (22, 222) étant prévue à partir d'au moins 2 mètres du sol.

2. Dispositif mobile de projection selon la revendication 1, dans lequel l'engin routier (12) est un véhicule autopropulsé ou une remorque.

3. Dispositif mobile de projection selon la revendication 1 ou 2, dans lequel l'unité de projection lumineuse (50) est montée mobile par rapport à l'engin routier (12).

4. Dispositif mobile de projection selon l'une quelconque des revendications 1 à 3, comprenant en outre un système (58, 258) d'évacuation de la chaleur produite par l'unité de projection lumineuse (50, 250).

5. Dispositif mobile de projection selon la revendication 4, dans lequel le système d'évacuation de chaleur (58, 258) est directement connecté à une sortie d'air de refroidissement d'une unité de projection lumineuse (50, 250).

6. Dispositif mobile de projection selon l'une quelconque des revendications 1 à 5, dans lequel l'engin routier (12) comprend une cabine de commande et/ou de surveillance (25) de l'unité de projection lumineuse (50).

7. Dispositif mobile de projection selon l'une quelconque des revendications 1 à 6, dans lequel la structure (14) est munie d'au moins une fenêtre (26), l'unité de projection lumineuse (50) étant montée de façon à pouvoir projeter à travers la fenêtre (26), la transmittance lumineuse à travers la fenêtre étant supérieure ou égale à 90% dans le domaine visible.

8. Ensemble mobile de projection (100), comprenant un dispositif mobile de projection (10, 210) selon l'une quelconque des revendications 1 à 7 dans lequel l'engin routier (12) est une remorque, et un véhicule tracteur (80) configuré pour tracter la remorque (12), le véhicule tracteur (80) comprenant un générateur d'énergie (82) et le dispositif mobile de projection (10, 210) comprenant des moyens d'alimentation configurés pour alimenter l'unité de projection lumineuse (50, 250) en énergie à partir du générateur d'énergie (82).

9. Utilisation d'un dispositif mobile de projection (10, 210) selon l'une quelconque des revendications 1 à 7 pour la réalisation d'une prestation de scénographie lumineuse.

## Patentansprüche

1. Bewegliche Scheinwerfervorrichtung (10, 210) für Lichtinszenierungen, umfassend ein Straßenfahrzeug (12), das mit einer auf Rädern (16) montierten Struktur (14, 214) versehen ist, und mindestens eine Lichtprojektionseinheit (50, 250), die in einem oberen Teil (22, 222) der Struktur (14, 214) angeordnet und dazu ausgestaltet ist, auf eine Weise gesteuert zu werden, um eine Lichtinszenierung in der äußeren Umgebung der mobilen Scheinwerfervorrichtung (10, 210) zu verwirklichen, wobei der obere Teil (22, 222) mindestens 2 Meter vom Boden entfernt vorgesehen ist.

2. Bewegliche Scheinwerfervorrichtung nach Anspruch 1, wobei das Straßenfahrzeug (12) ein selbstfahrendes Fahrzeug oder ein Anhänger ist.

3. Bewegliche Scheinwerfervorrichtung nach Anspruch 1 oder 2, wobei die Lichtprojektionseinheit (50) in Bezug auf das Straßenfahrzeug (12) beweglich montiert ist.

4. Bewegliche Scheinwerfervorrichtung nach einem der Ansprüche 1 bis 3, ferner umfassend ein System (58, 258) zur Abführung der von der Lichtprojektionseinheit (50, 250) produzierten Wärme.

5. Bewegliche Scheinwerfervorrichtung nach Anspruch 4, wobei das System (58, 258) zur Abführung von Wärme direkt mit einem Kühlungsluftausgang einer Lichtprojektionseinheit (50, 250) verbunden ist.

6. Bewegliche Scheinwerfervorrichtung nach einem der Ansprüche 1 bis 5, wobei das Straßenfahrzeug (12) eine Steuer- und/oder Überwachungskabine (25) der Lichtprojektionseinheit (50) umfasst.

7. Bewegliche Scheinwerfervorrichtung nach einem der Ansprüche 1 bis 6, wobei die Struktur (14) mit mindestens einem Fenster (26) versehen ist und die Lichtprojektionseinheit (50) auf eine Weise montiert ist, um durch das Fenster (26) projizieren zu können, wobei die Lichtdurchlässigkeit durch das Fenster größer oder gleich 90 % in der sichtbaren Domäne ist.

8. Bewegliche Scheinwerferanordnung (100), umfassend eine bewegliche Scheinwerfervorrichtung (10, 210) nach einem der Ansprüche 1 bis 7, wobei das Straßenfahrzeug (12) ein Anhänger ist, sowie ein Zugfahrzeug (80), das dazu ausgestaltet ist, den Anhänger (12) zu ziehen, wobei das Zugfahrzeug (80) einen Energieerzeuger (82) umfasst und die bewegliche Scheinwerfervorrichtung (10, 210) Versorgungsmittel umfasst, die dazu ausgestaltet sind, die Lichtprojektionseinheit (50, 250) mit Energie von dem Energieerzeuger (82) zu versorgen.

9. Verwendung einer beweglichen Scheinwerferanordnung (10, 210) nach einem der Ansprüche 1 bis 7 zur Verwirklichung einer Vorstellung mit Lichtinszenierung.

## Claims

1. A mobile projection device (10, 210) for projection mapping, the device comprising a road vehicle (12) having a structure (14, 214) mounted on wheels (16), and at least one light projector unit (50, 250) arranged in an upper portion (22,222) of the structure (14, 214) and configured to be controlled so as to provide projection mapping in the environment outside the mobile projection device (10, 210), wherein the upper portion (22, 222) is located at least 2 meters above the ground.

2. A mobile projection device according to claim 1, wherein the road vehicle (12) is a self-propelled vehicle or a trailer.

3. A mobile projection device according to claim 1 or claim 2, wherein the light projector unit (50) is mounted to be movable relative to the road vehicle (12).

4. A mobile projection device according to any one of claims 1 to 3, further comprising a system (58, 258) for removing the heat produced by the light projector unit (50, 250) .

5. A mobile projection device according to claim 4, wherein the system for removing heat(58, 258) is directly connected to a cooling air outlet of a light projector unit (50,250).

6. A mobile projection device according to any one of claims 1 to 5, wherein the road vehicle (12) includes a cabin (25) for controlling and/or monitoring the light projector unit (50).

7. A mobile projection device according to any one of claims 1 to 6, wherein the structure (14) is provided with at least one window (26), the light projector unit (50) being mounted so as to be capable of projecting through the window (26), the light transmittance through the window being greater than or equal to 90% in the visible range.

8. A mobile projector set (100) comprising a mobile projection device (10, 201) according to any one of claims 1 to 7, in which the road vehicle (12) is a trailer, together with a tractor vehicle (80) configured to tow the trailer (12), the tractor vehicle (80) including an energy generator (82) and the mobile projection device (10, 210) including power supply means configured to power the light projector unit (50, 250) with energy from the energy generator (82).

9. The use of a mobile projection device (10, 210) according to any one of claims 1 to 7 for providing a projection mapping service.
